# EUROPÄISCHE PATENTANMELDUNG

(11) **EP 4 344 868 A1**
(43) Veröffentlichungstag der Anmeldung: **03.04.2024**
(21) Anmeldenummer: 23200222.0
(22) Anmeldetag: 27.09.2023
(51) Int. Cl.: B32B 21/02, B32B 21/04, B32B 21/13, B32B 21/14, E04C 2/10, E04C 2/12, E04C 2/14

(54) **HOLZPLATTE**

(30) Priorität: 28.09.2022 DE 102022124963
(71) Anmelder: Kellerholz GmbH & Co. KG, 77839 Lichtenau (DE)
(72) Erfinder: KELLER, Jörg, 77855 Achern (DE)
(74) Vertreter: Mertzlufft-Paufler, Cornelius

(57) **Zusammenfassung**

Die Erfindung befasst sich mit Verbesserungen auf dem technischen Gebiet der Holzplatten. Hierzu wird eine Holzplatte (1) mit zwei äußeren Sichtlagen (2) und mindestens einer zwischen den Sichtlagen (2) angeordneten Zwischenlage (3,4) vorgeschlagen. Zumindest eine der Sichtlagen (2) besteht aus Vollholzelementen 5). Zumindest eine Zwischenlage der Holzplatte ist eine Hybridlage (3,4), die zumindest ein Vollholzelement (5,7,8) und zumindest ein Spanholzelement (6) umfasst.

## Beschreibung

Die Erfindung betrifft eine Holzplatte mit zwei äußeren Sichtlagen und mindestens einer zwischen den Sichtlagen angeordneten Zwischenlage.

Derartige Holzplatten sind in unterschiedlichen Ausführungsformen aus der Praxis und beispielsweise als Sperrholzplatten vorbekannt.

Sperrholzplatten sind aufgrund ihres gesperrten Aufbaus statisch besonders belastbar. Sperrholz besteht aus mindestens drei miteinander verleimten und verpressten Holzlagen, wobei ein Faserverlauf von zwei übereinanderliegenden, also im Schichtaufbau des Sperrholzes nebeneinander liegenden Holzlagen in einem Winkel von 90° zueinander ausgerichtet sind. Dadurch werden richtungsgebundene Werkstoffeigenschaften, wie z.B. das Quell- und Schwindverhalten der Sperrholzplatte über eine Plattenebene homogenisiert. Der Werkstoff Sperrholz arbeitet im Gegensatz zu Massivholz nicht mehr nennenswert, da das Holz abgesperrt ist.

Derartige aus Sperrholz gefertigte Holzplatten werden beispielsweise als Massivholztafeln in der Massivholzbauweise oder auch im Möbelbau verwendet. Hierbei kommen Holzplatten aus sogenanntem Brettsperrholz zum Einsatz, das über Kreuz verleimte Brettlagen aus Vollholzbrettern umfasst.

Brettsperrholzplatten eignen sich aufgrund ihrer statischen Belastbarkeit für viele Anwendungen und sind aufgrund ihres Aufbaus auch vergleichsweise einfach zu recyceln.

Brettsperrholz steht allerdings auch in der Kritik, da zur Herstellung von Brettsperrholz nur qualitativ hochwertige und damit relativ teure Vollholzelemente, wie Vollholzbretter verwendet werden. Vollholzbretter werden aus Holzstämmen gesägt. Je nach Beschaffenheit der Holzstämme kann nur etwa 50 % ihrer Holzmasse zu Vollholzbrettern verarbeitet werden. Die restliche Holzmasse, die auch als Restholz bezeichnet wird, eignet sich nicht für die Herstellung von Brettsperrholz.

Aufgabe der Erfindung ist es daher, eine Holzplatte der eingangs genannten Art bereitzustellen, die vergleichbare Eigenschaften wie eine Brettsperrholzplatte aufweist, jedoch eine bessere Verwertung von Holzstämmen bei ihrer Herstellung ermöglicht und dadurch eine schonendere Nutzung der Ressource Holz erlaubt.

Zur Lösung der Aufgabe wird eine Holzplatte mit den Merkmalen des Anspruchs 1 vorgeschlagen. Zur Lösung der Aufgabe wird somit insbesondere eine Holzplatte mit zwei äußeren Sichtlagen und zumindest einer zwischen den Sichtlagen angeordneten Zwischenlage vorgeschlagen, die dadurch gekennzeichnet ist, dass zumindest eine der beiden Sichtlagen aus Vollholzelementen, insbesondere aus Vollholzbrettern, besteht und zumindest eine Zwischenlage eine Hybridlage ist, die zumindest ein Vollholzelement und zumindest ein Spanholzelement umfasst.

Der Aufbau der erfindungsgemäßen Holzplatte erlaubt die vollumfängliche Verwertung der Holzmasse von Stammholz für die Herstellung der Holzplatte. Der Anteil des Stammholzes, der zu Vollholzelementen, wie beispielsweise Vollholzbrettern verarbeitet wird, kann zur Herstellung der zumindest einen äußeren Sichtlagen aus Vollholzelementen genutzt werden. Die übrigen Restholzanteile eines Holzstammes, die nicht zur Herstellung von Vollholzelementen verwendet werden können und die beispielsweise in Form von Sägemehl, Holzspänen und/oder Hackschnitzeln anfallen, können verwertet werden, um das zumindest ein Spanholzelement der Hybridlage der Holzplatte herzustellen.

Durch die Kombination zumindest eines Vollholzelements mit zumindest einem Spanholzelement innerhalb der als Zwischenlage dienenden zumindest einen Hybridlage der erfindungsgemäßen Holzplatte kann die Hybridlage statische Eigenschaften aufweisen, die der Holzplatte als Ganzes Eigenschaften verleihen, die den Eigenschaften einer Brettsperrholzplatte, die vollständig aus Vollholzbrettern besteht, entsprechen oder zumindest nahekommen.

Bei einer bevorzugten Ausführungsform der Holzplatte bestehen beide Sichtlagen aus Vollholzelementen.

Die zumindest eine Sichtlage oder auch beide Sichtlagen aus Vollholzelementen, beispielsweise aus Vollholzbrettern, kann/können armierend für den Lagenverbund der Holzplatte wirken. Ferner werden durch die Sichtlage(n) aus Vollholzbrettern darunter liegende Spanholzelemente kaschiert. Die Holzplatte wirkt für den Betrachter somit auch optisch wie eine Brettsperrholzplatte. Die Holzplatte ist besonders belastbar und hat einen besonders wertigen Gesamteindruck, wenn ihre beiden äußeren Sichtlagen aus Vollholzelementen, vorzugsweise aus Vollholzbrettern, hergestellt sind.

Die Vollholzelemente benachbarter Lagen der Holzplatte können mit ihrem Faserverlauf quer oder rechtwinklig zueinander ausgerichtet sein. Bevorzugt ist es, wenn die Vollholzelemente benachbarter Lagen mit einem Faserverlauf von 90° zueinander ausgerichtet sind. So wird eine Holzplatte bereitgestellt, deren Lagen gesperrt zueinander ausgerichtet sind. Aufgrund ihres gesperrten Aufbaus ist diese Holzplatte dann statisch besonders hoch belastbar und kann auch Scher- und Biegekräften widerstehen. Zudem zeichnet sich die Holzplatte dann durch ihr besonders günstiges Quell- und Schwindverhalten aus, das dem Quell- und Schwindverhalten einer Brettsperrholzplatte, die vollständig aus Vollholzbrettern zusammengesetzt ist, entsprechen kann.

Besonders vorteilhaft ist es, wenn die zumindest eine Hybridlage zumindest zwei randseitige Vollholzelemente aufweist, zwischen denen zumindest ein Spanholzelement angeordnet ist. Die beiden randseitigen Vollholzelemente können der Hybridlage, insbesondere im Verbund mit den benachbarten Lagen der Holzplatte, der Holzplatte gewünschte statische Eigenschaften verleihen.

Bei einer Ausführungsform der Holzplatte ist vorgesehen, dass zwischen den zumindest zwei randseitigen Vollholzelementen einer Hybridlage zumindest ein inneres Vollholzelement angeordnet ist. Ein inneres Vollholzelement innerhalb einer Hybridlage kann die Stabilität und statische Belastbarkeit der Hybridlage, insbesondere im Zusammenspiel mit benachbarten Lagen der Holzplatte, erhöhen. Durch zumindest ein inneres Vollholzelement kann die Fähigkeit der Hybridlage, Biegekräfte aufzunehmen, im Vergleich zu einer reinen Spanholzlage deutlich erhöht sein.

Insbesondere dann, wenn die Vollholzelemente benachbarter Lagen der Holzplatte mit ihrem Faserverlauf quer oder rechtwinklig zueinander ausgerichtet sind, können sich zwischen den Vollholzelementen benachbarter Lagen der Holzplatte Kreuzungspunkte ergeben, die die Stabilität der Holzplatte und ihre statischen Eigenschaften positiv beeinflussen. Über die Lagen der Holzplatte hinweg können die Vollholzelemente an den Kreuzungspunkten miteinander verbunden, insbesondere verleimt sein. So entsteht ein die Holzplatte als Ganzes stabilisierendes Gerüst aus Vollholzelementen, das den gesamten Plattenaufbau durchzieht. Dies insbesondere dann, wenn beide Sichtlagen der Holzplatte Vollholzelemente aufweisen oder vollständig aus Vollholzelementen zusammengesetzt sind.

Bei einer Ausführungsform der Holzplatte ist vorgesehen, dass die zumindest eine Hybridlage zumindest drei, vorzugsweise gleichmäßig in der Hybridlage verteilt angeordnete Vollholzelemente aufweist. Dabei kann zwischen zwei benachbarten Vollholzelementen der zumindest einen Hybridlage zumindest ein Spanholzelement angeordnet sein. Die Hybridlage dieser Holzplatte weist somit eine Abfolge von Vollholzelementen und Spanholzelementen auf. Es kann auch vorgesehen sein, dass jedes zweite Element der Hybridlage ein Vollholzelement bzw. ein Spanholzelement ist. So weist die Holzplatte dann einen Aufbau auf, in dem in einer Lagenebene der Hybridlage auf ein Vollholzelement ein Spanholzelement folgt.

Durch ihre Vollholz- und Spanholzelemente besteht die Holzplatte - bis auf etwaige Leimschichten zwischen den einzelnen Lagen - ausschließlich aus Holzelementen und kann als Vollholzplatte bezeichnet werden. Dies begünstigt ein einfaches Recycling der Holzplatte nach ihrer Nutzung. Im einfachsten Fall kann die Holzplatte zerkleinert und die dabei anfallenden Holzspäne und/oder Hackschnitzel zu Spanholzelementen verarbeitet werden. Eine aufwendige Trennung der einzelnen Lagen ist hierbei nicht erforderlich, um die Holzplatte einer umweltfreundlichen Verwertung zuzuführen. Auf diese Weise kann die Holzplatte nach ihrer Nutzung vollständig verwertet werden, beispielsweise um erfindungsgemäße Holzplatte und/oder Spanholzplatten herzustellen.

Die Vollholzelemente innerhalb der Hybridlage können als statisch belastbares Gerüst innerhalb der Hybridlage der Holzplatte fungieren. Die Zwischenräume zwischen einzelnen Vollholzelementen der Hybridlage können durch die Spanholzelemente aufgefüllt sein. Durch den Materialwechsel von Vollholzelement zu Spanholzelement innerhalb der Hybridlage, kann die Holzplatte diverse positive Eigenschaften erhalten. Die Verwendung von Spanholzelementen in der Holzplatte kann schwingungsdämpfend und/oder schalldämmend wirken und/oder eine wärmedämmende Wirkung der Holzplatte verbessern.

Die Holzplatte lässt sich besonders wirtschaftlich herstellen, wenn das zumindest eine Vollholzelement und das zumindest eine Spanholzelement der zumindest einen Hybridlage dieselben Abmessungen aufweisen. Auf diese Weise lässt sich die Holzplatte besonders einfach in gleichmäßigen Stufen skalieren. Besonders vorteilhaft ist es, wenn sämtliche Vollholzelemente der Holzplatte dieselben Abmessungen aufweisen. Es ist auch möglich, dass sämtliche Spanholzelemente der Holzplatte dieselben Abmessungen aufweisen. Bei einer Ausführungsform der Holzplatte weisen sämtliche Vollholzelemente und sämtliche Spanholzelemente der Holzplatte dieselben Abmessungen auf. Auf diese Weise kann die Holzplatte aus nur einem Typ von Vollholzelementen und nur einem Typ von Spanholzelementen hergestellt sein. Auch dieser Aufbau kann eine einfache Skalierbarkeit der Holzplatte begünstigen.

Eine besonders gute Verwertung von Stammholz zur Herstellung der Holzplatte ist möglich, wenn die zumindest eine Hybridlage einen Spanholzanteil von zumindest 50 % aufweist. Es ist auch möglich, dass die Holzplatte im Ganzen einen Spanholzanteil von mindestens 50 % aufweist.

Die Lagen der Holzplatte, nämlich insbesondere die zumindest zwei äußeren Sichtlagen und die zumindest eine Hybridlage und/oder gegebenenfalls auch zumindest eine weitere innere als Zwischenlage fungierende Lage aus Vollholzelementen, können miteinander verleimt und/oder verpresst sein.

Die Holzplatte kann eine ungerade Anzahl von Lagen aufweisen.

Ferner kann die Holzplatte zwischen den beiden Sichtlagen zumindest eine Innenlage aus Vollholzelementen aufweisen. Die Innenlage kann aus statischen Gründen beispielsweise eine Mittellage der Holzplatte sein. Vorzugsweise weist die Holzplatte einen symmetrischen Lagenaufbau auf. Das heißt, dass die Holzplatte dann beidseits einer Mittellage dieselbe Abfolge von Lagen aufweist.

Die Verwendung einer Mittellage aus Vollholzelementen kann vorteilhaft sein, um die Holzplatte besonders stabil zu gestalten.

Die Holzplatte kann bei einer Ausführungsform insgesamt fünf Lagen umfassen. Von den fünf Lagen können beispielsweise dann zwei äußere Sichtlagen und eine als Mittellage fungierende Innenlage aus Vollholzelementen und zwei Zwischenlagen als Hybridlagen ausgebildet sein.

Die Spanholzelemente der Holzplatte können vorzugsweise aus Restholz, nämlich beispielsweise aus Holzspänen, Hackschnitzeln und/oder Sägemehl bestehen. Vorzugsweise bestehen die Spanholzelemente aus Restholz, das bei der Herstellung der Vollholzelemente, insbesondere aus Stammholz anfällt. Die Spanholzelemente der Holzplatte können auch aus Spanholz bestehen, das bei der Verwertung von erfindungsgemäßen Holzplatten und/oder bei der Verwertung von Sperrholzplatten und/oder Spanplatten anfällt.

Die Vollholzelemente der Holzplatte können Vollholzbretter sein. Die Spanholzelemente der Holzlatte können beispielsweise Spanplattenelemente sein. Die Spanplattenelemente können hinsichtlich Form und Abmessung den Vollholzelementen entsprechen und/oder zumindest brettförmig ausgebildet sein.

Die Spanplattenelemente können beispielsweise Spanplattenelemente sein, die aus Grob-Spanplattenmaterial und/oder aus OSB-Spanplattenmaterial und/oder aus Flachpressspanplattenmaterial bestehen.

Die zuvor erläuterte Holzplatte kann auch als Brett-Span-Schichtholzplatte (BSSP) bezeichnet werden.

### Die Erfindung wird nachfolgend anhand von

Ausführungsbeispielen näher beschrieben, ist aber nicht auf die gezeigten Ausführungsbeispiele beschränkt. Weitere Ausführungsbeispiele der Erfindung ergeben sich durch Kombination der Merkmale einzelner oder mehrerer Ansprüche untereinander und/oder durch Kombination einzelner oder mehrerer Merkmale der Ausführungsbeispiele. Es zeigen:
- Figur 1: eine Draufsicht auf eine aus insgesamt fünf Lagen bestehenden Holzplatte, wobei die Draufsicht eine Sichtlage der Holzplatte zeigt und die Sichtlage ausschließlich aus Vollholzelementen besteht,
- Figur 2: eine Draufsicht auf einen ersten Typ einer Hybridlage der in Figur 1 gezeigten Holzplatte, wobei die Hybridlage insgesamt drei Vollholzelemente aufweist, und wobei zwischen zwei benachbarten Vollholzelementen aus Vollholzbrettern jeweils vier Spanholzelemente aus Spanplattenelementen angeordnet sind,

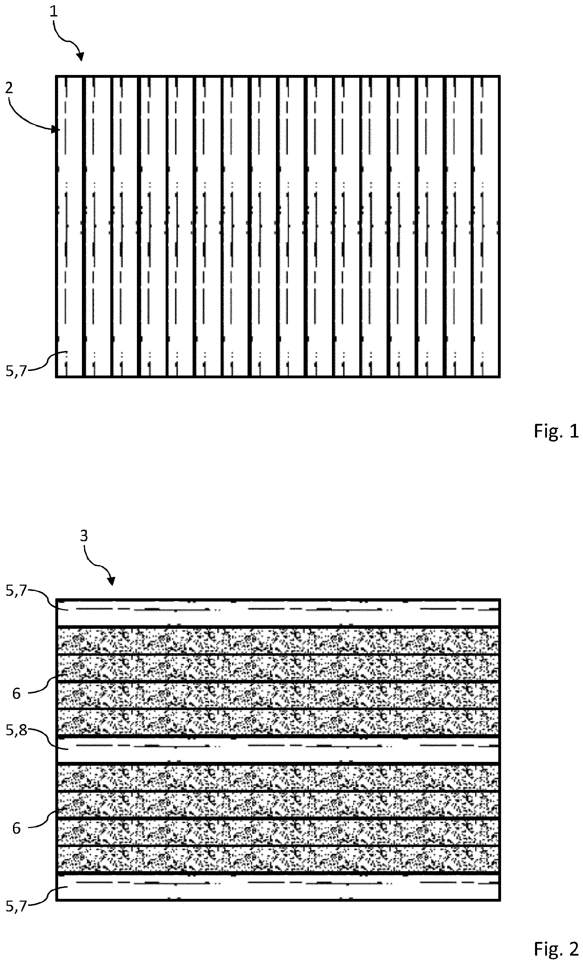

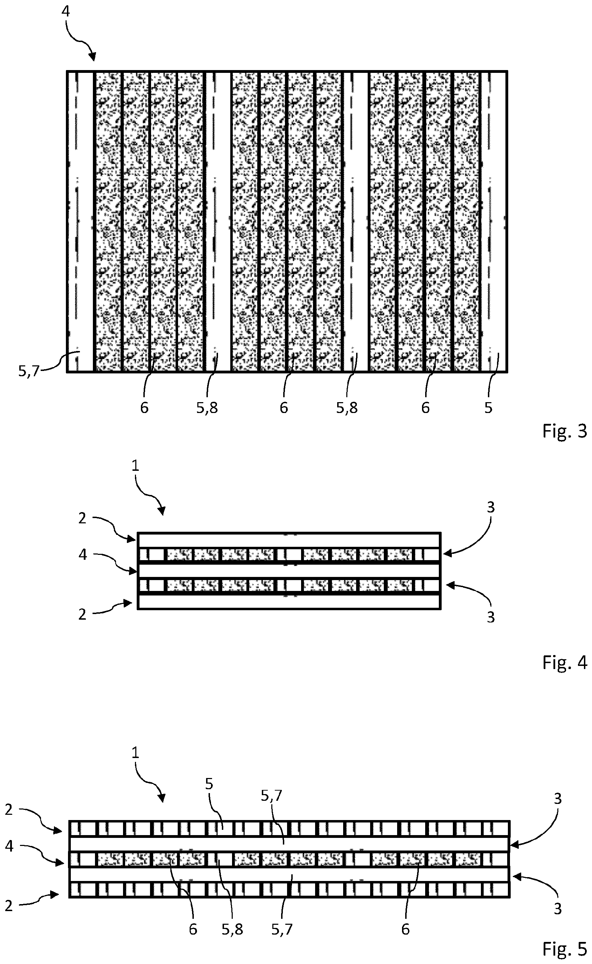

- Figur 3: eine Draufsicht auf einen zweiten Typ einer Hybridlage der in Figur 1 gezeigten Holzplatte, wobei die Hybridlage insgesamt vier gleichmäßig über die Hybridlage verteilt angeordnete Vollholzelemente in Form von Vollholzbrettern aufweist und zwischen zwei benachbarten Vollholzbrettern jeweils vier Spanholzelemente aus Restholz angeordnet sind, und wobei die Vollholzelemente dieser Hybridlage in der Holzplatte mit ihrem Faserverlauf in einem Winkel von 90° zu einem Faserverlauf der Vollholzelemente der in Figur 2 gezeigten Hybridlage und parallel zu einem Faserverlauf der Vollholzelemente der beiden Sichtlagen der Holzplatte ausgerichtet sind,
- Figur 4: eine stirnseitige Ansicht der in Figur 1 gezeigten Holzplatte mit einer in Figur 3 gezeigten Hybridlage als Mittellage, wobei beidseits der Mittellage zwei der in Figur 2 gezeigten Hybridlagen angeordnet sind,
- Figur 5: eine Seitenansicht der in den Figuren 1 und 4 gezeigten Holzplatte,
- Figur 6: eine Draufsicht auf eine weitere, aus insgesamt fünf Lagen bestehenden Holzplatte, wobei die Draufsicht eine Sichtlage der Holzplatte zeigt und die Sichtlage ausschließlich aus Vollholzelementen besteht,
- Figur 7: eine Draufsicht auf einen ersten Typ einer Hybridlage der in Figur 6 gezeigten Holzplatte, wobei dieser Typ von Hybridlage insgesamt drei Vollholzelemente aufweist, und wobei jeweils zwischen zwei benachbarten Vollholzelementen ein Spanholzelement angeordnet ist,

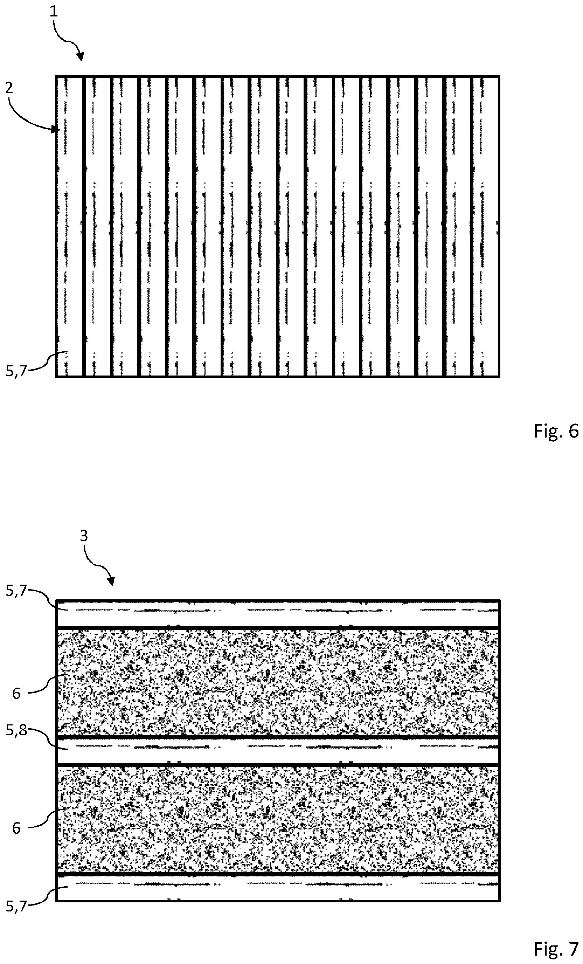

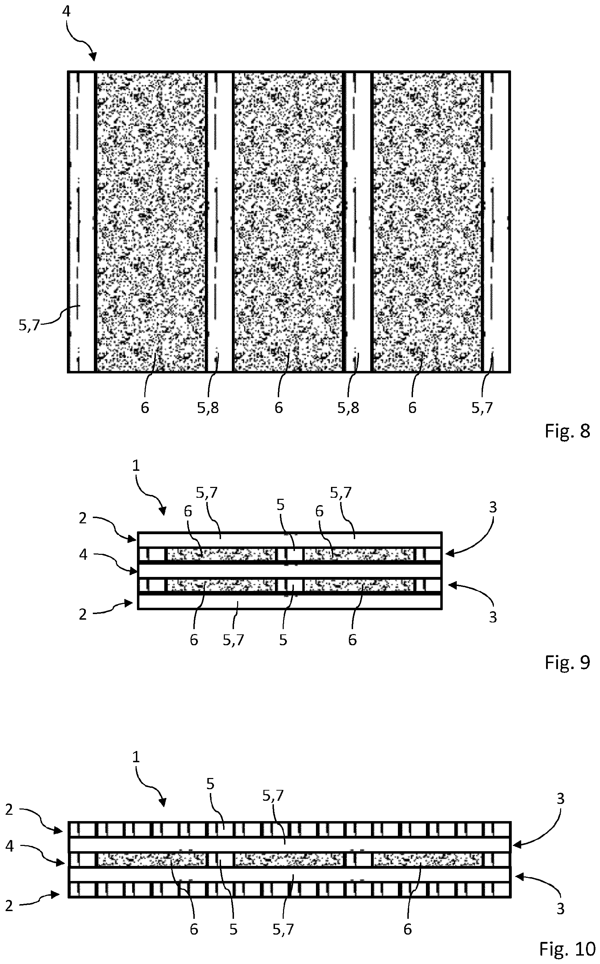

- Figur 8: eine Draufsicht auf einen zweiten Typ einer Hybridlage der in Figur 6 gezeigten Holzplatte, wobei die Hybridlage insgesamt vier gleichmäßig über die Hybridlage verteilt angeordnete Vollholzelemente aufweist und zwischen zwei benachbarten Vollholzelementen jeweils ein Spanholzelement angeordnet ist, und wobei die Vollholzelemente dieser Hybridlage in der Holzplatte mit ihrem Faserverlauf in einem Winkel von 90° zu einem Faserverlauf der Vollholzelemente der in Figur 7 gezeigten Hybridlage und parallel zu einem Faserverlauf der Vollholzelemente der beiden Sichtlagen der Holzplatte ausgerichtet sind,
- Figur 9: eine stirnseitige Ansicht der in Figur 6 gezeigten Holzplatte, wobei die in Figur 8 gezeigte Hybridlage eine Mittellage der insgesamt 5-lagigen Holzplatte bildet,
- Figur 10: eine Seitenansicht der in den Figuren 6 und 9 gezeigten Holzplatte,
- Figur 11: eine Draufsicht auf eine weitere, aus insgesamt fünf Lagen bestehenden Holzplatte, wobei die Draufsicht eine Sichtlage der Holzplatte zeigt und die Sichtlage ausschließlich aus Vollholzelementen besteht,
- Figur 12: eine Draufsicht auf einen ersten Typ einer Hybridlage der in Figur 11 gezeigten Holzplatte, wobei dieser Typ von Hybridlage in wechselnder Abfolge Vollholzelemente und Spanholzelemente aufweist, sodass jedes zweite Element der Hybridlage ein Spanholzelement ist,
- Figur 13: eine Draufsicht auf einen zweiten Typ einer Hybridlage der in Figur 11 gezeigten Holzplatte, wobei auch dieser Typ von Hybridlage in wechselnder Abfolge Vollholzelemente und Spanholzelemente aufweist, sodass jedes zweite Element der Hybridlage ein Spanholzelement ist, und wobei die Vollholzelemente dieser Hybridlage in der Holzplatte mit ihrem Faserverlauf in einem Winkel von 90° zu einem Faserverlauf der Vollholzelemente der in Fig. 12 gezeigten Hybridlage und parallel zu einem Faserverlauf der Vollholzelemente der beiden Sichtlagen der Holzplatte ausgerichtet sind,
- Figur 14: eine stirnseitige Ansicht der in Figur 11 gezeigten Holzplatte, wobei die in Figur 13 gezeigte Hybridlage eine Mittellage der insgesamt 5-lagigen Holzplatte bildet, sowie
- Figur 15: eine Seitenansicht der in den Figuren 11 und 14 gezeigten Holzplatte.

Bei der nachfolgenden Figurenbeschreibung erhalten in ihrer Funktion übereinstimmende Elemente der Holzplatte auch bei abweichender Gestaltung übereinstimmende Bezugszeichen.

Sämtliche Figuren zeigen zumindest Teile einer jeweils im Ganzen mit 1 bezeichneten Holzplatte. Die Holzplatten 1 weisen jeweils zwei äußere Sichtlagen 2 und zwischen den Sichtlagen 2 eine Anzahl von drei Zwischenlagen auf. Die Sichtlagen 2 der Holzplatten 1 bestehen aus Vollholzelementen 5, nämlich aus Vollholzbrettern.

Die Zwischenlagen sind als Hybridlagen 3,4 ausgebildet und umfassen jeweils sowohl Vollholzelemente 5 als auch Spanholzelemente 6. Die Sichtlagen 2 der Holzplatten 1 weisen keine Spanholzelemente 6 auf. Die Vollholzelemente 5 benachbarter Lagen 2, 3, 4 der Holzplatte 1 sind mit ihrem jeweiligen Faserverlauf quer, nämlich rechtwinklig und damit in einem Winkel von 90° zueinander ausgerichtet. Auf diese Weise wird die Holzplatte 1 im Sinne einer Sperrholzplatte gesperrt und kann somit auch als Sperrholzplatte bezeichnet werden.

Jede der gezeigten Hybridlagen 3,4 der Holzplatten 1 weist jeweils zwei randseitige Vollholzelemente 7 auf. Randseitige Vollholzelemente 7 sind dabei solche Vollholzelemente, die über ihre gesamte Längserstreckung zumindest einen Teil der Außenseite der Holzplatte 1 bilden und/oder die jeweilige Hybridlage 3,4 in einer Richtung quer zu ihrem Faserverlauf abschließen.

Zwischen den randseitigen Vollholzelementen 7 weist jede Hybridlage 3,4 mindestens ein Spanholzelement 6, in den gezeigten Ausführungsbeispielen zwischen zwei und zwölf Spanholzelemente 6 auf.

Die Figuren zeigen auch, dass zwischen den zwei randseitigen Vollholzelementen 7 jeder Hybridlage 3,4 zumindest ein inneres Vollholzelement 8 angeordnet ist. Bei dem in Figur 2 gezeigten Ausführungsbeispiel einer Hybridlage 3 weist diese ein inneres Vollholzelement 8 auf. Bei dem in Figur 3 gezeigten Ausführungsbeispiel einer Hybridlage 4 weist diese insgesamt zwei innere Vollholzelemente 8 auf. Bei dem in Figur 7 gezeigten Ausführungsbeispiel einer Hybridlage weist diese ein inneres Vollholzelement 8 auf. Auch bei dem in Figur 8 gezeigten Ausführungsbeispiel einer Hybridlage 4 sind zwei innere Vollholzelemente 8 vorgesehen.

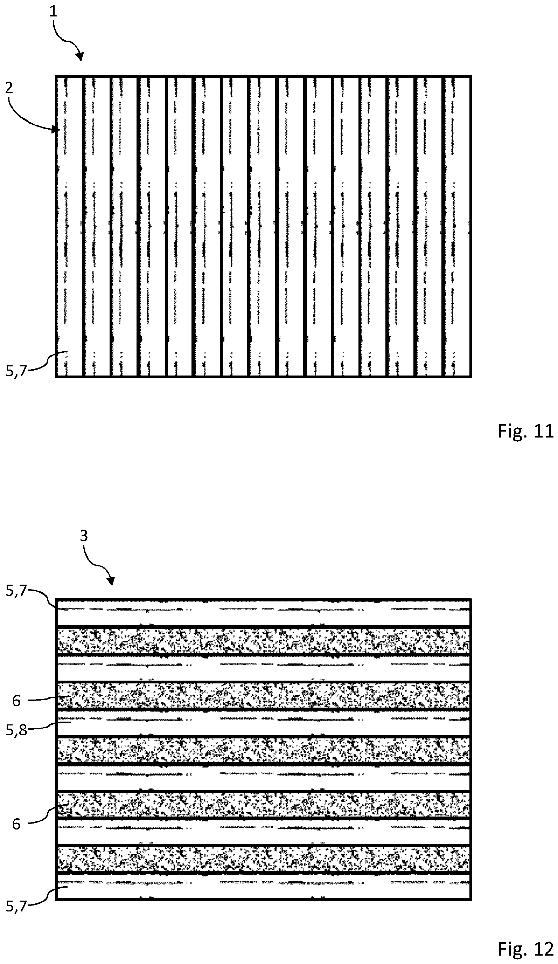

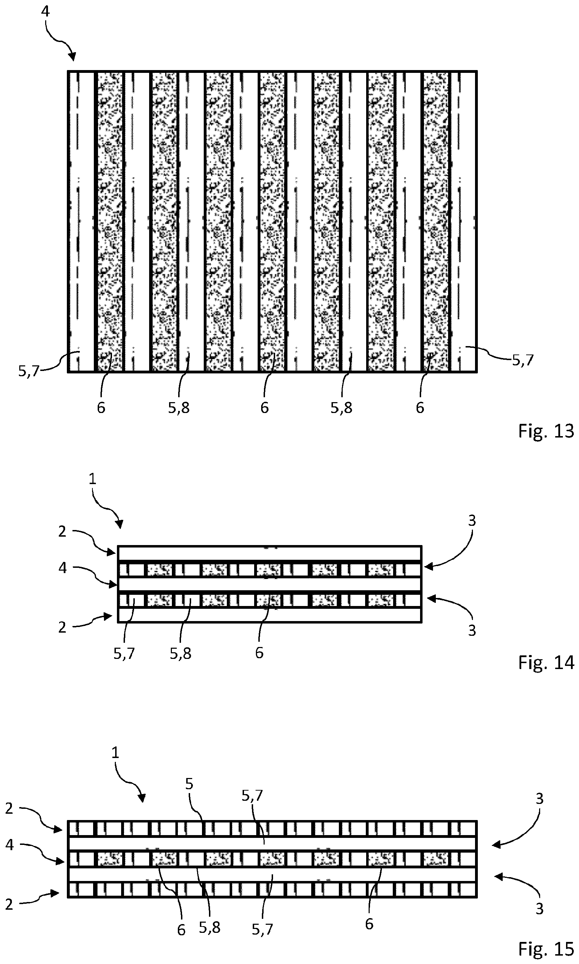

Die in den Figuren 12 und 13 gezeigten Hybridlagen 3 und 4 weisen jeweils mehrere Vollholzelemente 5 und mehrere Spanholzelemente 6 auf, wobei jedes zweite Element beider Hybridlagen 3, 4 ein Spanholzelement 6 ist.

Die mit 4 bezeichneten Hybridlagen weisen somit zumindest zwei gleichmäßig in der Hybridlage 4 verteilt angeordnete, innere Vollholzelemente 8 auf. Zwischen zwei benachbarten Vollholzelementen 5, 8 dieser Hybridlage 4 ist dann jeweils zumindest ein Spanholzelement 6 angeordnet. Bei dem in Figur 3 gezeigten Ausführungsbeispiel einer Mittellage 4 sind zwischen zwei benachbarten Vollholzelementen 5 der Hybridlage 4 jeweils vier Spanholzelemente 6 angeordnet.

Die Vollholzelemente 5, 7, 8 und die Spanholzelemente 6 der Hybridlagen 3, 4 weisen dieselben Abmessungen auf. Die Figuren zeigen ferner, dass sämtliche Vollholzelemente 5, 7, 8 der Holzplatten 1 untereinander dieselben Abmessungen aufweisen. Auch die Spanholzelemente 6 der Holzplatte 1 weisen diese Abmessungen auf. Die Figuren verdeutlichen, dass einzelne der gezeigten Hybridlagen 3, 4 einen Spanholzanteil von zumindest 50 % aufweisen. Bei einer in den Figuren nicht gezeigten Ausführungsform der Holzplatte 1 ist vorgesehen, dass die Holzplatte als Ganzes ein Spanholzanteil von zumindest 50 % aufweist.

Die insgesamt fünf Lagen 2, 3, 4 jeder der gezeigten Holzplatten 1 sind untereinander verleimt und verpresst. Alle drei in den Figuren gezeigten Holzplatten 1 umfassen eine ungerade Anzahl von Lagen 2, 3, 4, nämlich fünf Lagen 2, 3, 4 auf. Bei einer in den Figuren nicht gezeigten Ausführungsform der Holzplatte 1 kann diese zwischen den beiden Sichtlagen 2 zumindest eine Innenlage als Zwischenlage aufweisen, die vollständig aus Vollholzelementen 5, 7, 8 besteht. Die Innenlage kann hierbei eine Mittellage der Holzplatte 1 sein.

Wie zuvor bereits erläutert wurde, bestehen die Spanholzelemente 6 der gezeigten Holzplatten 1 vorzugsweise aus Restholz, beispielsweise aus Holzspänen, Hackschnitzeln und/oder Sägemehl, die/das bei der Herstellung der Vollholzelemente 5, 7, 8 für die Holzplatten 1 bei der Verwertung von Holzstämmen anfällt. Die Vollholzelemente 5, 7, 8 der in den Figuren gezeigten Holzplatten 1 sind jeweils Vollholzbretter. Die Spanholzelemente 6 der Holzplatten 1 sind Spanplattenelemente, die beispielsweise aus Grobspanplattenmaterial oder auch aus OSB-Spanplattenmaterial oder anderen Spanplattenmaterial hergestellt sein können.

Die so aufgebauten Holzplatten 1 können als Brett-Span-Schichtholzplatten (BSSP) bezeichnet werden.

Die Erfindung befasst sich mit Verbesserungen auf dem technischen Gebiet der Holzplatten. Hierzu wird eine Holzplatte 1 mit zwei äußeren Sichtlagen 2 und mindestens einer zwischen den Sichtlagen 2 angeordneten Zwischenlage 3,4 vorgeschlagen. Zumindest eine der Sichtlagen 2 besteht aus Vollholzelementen 5. Zumindest eine Zwischenlage der Holzplatte ist eine Hybridlage 3,4, die zumindest ein Vollholzelement 5,7,8 und zumindest ein Spanholzelement 6 umfasst.

### Bezugszeichenliste

- 1: Holzplatte, Brett-Span-Schichtholzplatte (BSSP)
- 2: Sichtlage
- 3: Hybridlage
- 4: Hybridlage
- 5: Vollholzelement
- 6: Spanholzelement
- 7: randseitiges Vollholzelement in 3, 4
- 8: inneres Vollholzelement

## Patentansprüche

1. Holzplatte (1) mit zwei äußeren Sichtlagen (2) und zumindest einer zwischen den Sichtlagen (2) angeordneten Zwischenlage (3,4), **dadurch gekennzeichnet, dass** zumindest eine der beiden Sichtlagen (2) aus Vollholzelementen (5) besteht und zumindest eine Zwischenlage (3,4) eine Hybridlage (3,4) ist, die zumindest ein Vollholzelement (5,7,8) und zumindest ein Spanholzelement (6) umfasst.

2. Holzplatte (1) nach Anspruch 1, wobei beide Sichtlagen (2) aus Vollholzelementen (5) bestehen und/oder wobei die Vollholzelemente (5,7,8) benachbarter Lagen (2,3,4) der Holzplatte (1) mit ihrem Faserverlauf quer oder rechtwinklig zueinander ausgerichtet sind.

3. Holzplatte (1) nach Anspruch 1 oder 2, wobei die zumindest eine Hybridlage (3,4) zumindest zwei randseitige Vollholzelemente (7) aufweist, zwischen denen zumindest ein Spanholzelement (6) angeordnet ist.

4. Holzplatte (1) nach einem der vorherigen Ansprüche, wobei zwischen den zumindest zwei randseitigen Vollholzelementen (7) zumindest ein inneres Vollholzelement (8) angeordnet ist.

5. Holzplatte (1) nach einem der vorherigen Ansprüche, wobei die zumindest eine Hybridlage (4) zumindest zwei, vorzugsweise gleichmäßig in der Hybridlage (4) verteilt angeordnete, Vollholzelemente (5,8) aufweist, insbesondere wobei zwischen zwei benachbarten Vollholzelementen (5,8) der zumindest einen Hybridlage (4) zumindest ein Spanholzelement (6) angeordnet ist.

6. Holzplatte (1) nach einem der vorherigen Ansprüche, wobei das zumindest eine Vollholzelement (5,7,8) und das zumindest eine Spanholzelement (6) der Hybridlage (3,4) dieselben Abmessungen aufweisen.

7. Holzplatte (1) nach einem der vorherigen Ansprüche, wobei sämtliche Vollholzelemente (5,7,8) der Holzplatte (1) dieselben Abmessungen aufweisen und/oder wobei sämtliche Spanholzelemente (6) der Holzplatte (1) dieselben Abmessungen aufweisen und/oder wobei sämtliche Vollholzelemente (5,7,8) und sämtliche Spanholzelemente (6) der Holzplatte (1) dieselben Abmessungen aufweisen.

8. Holzplatte (1) nach einem der vorherigen Ansprüche, wobei die zumindest eine Hybridlage (3,4) einen Spanholzanteil von zumindest 50% aufweist und/oder wobei die Holzplatte (1) einen Spanholzanteil von zumindest 50% aufweist.

9. Holzplatte (1) nach einem der vorherigen Ansprüche, wobei die Lagen (2,3,4) der Holzplatte (1) miteinander verleimt und/oder verpresst sind.

10. Holzplatte (1) nach einem der vorherigen Ansprüche, wobei die Holzplatte (1) eine ungerade Anzahl von Lagen (2,3,4) aufweist und/oder wobei die Holzplatte (1) zwischen den beiden Sichtlagen (2) zumindest eine Innenlage aus Vollholzelementen (5,7,8) aufweist, insbesondere wobei die Innenlage eine Mittellage der Holzplatte (1) ist.

11. Holzplatte (1) nach einem der vorherigen Ansprüche, wobei die Spanholzelemente (6) aus Restholz, insbesondere aus Holzspänen, Hackschnitzeln und/oder Sägemehl bestehen, das bei der Herstellung von Vollholzelementen (5,7,8) anfällt.

12. Holzplatte (1) nach einem der vorherigen Ansprüche, wobei die Vollholzelemente (5,7,8) der Holzplatte (1) Vollholzbretter sind und/oder wobei die Spanholzelemente (6) der Holzplatte (1) Spanplattenelemente, beispielsweise Grobspanplattenelemente und/oder OSB-Spanplattenelemente und/oder Flachpressspanplattenelemente, sind.
